# EUROPEAN PATENT APPLICATION

(11) **EP 2 143 907 A1**
(43) Date of publication of application: **13.01.2010**
(21) Application number: 08005343.2
(22) Date of filing: 20.03.2008
(51) Int. Cl.: F02C 1/02, F02C 7/00, F01D 25/00, F01K 7/30, F02C 3/05

(54) **System and method for eddy flow conversion**

(71) Applicant: Kadirkhodjaev, Ulugbek, 9A/32 Kunaeva Street 100017 Taschkent, Miribad District (UZ); Asanov, Ibragim, Appartment 13 Bekhterevo-Sarakulskaya-Strasse 7 700017 Taschkent (UZ); Eroglu, Yakup, Tuna cad. No. 15 34150 Bayrampasa Istanbul (TR)
(72) Inventor: Karimov, Shoirdjan Akhralovich, Tashkent (UZ); Timofeev, Sergey Michaylovich, Tashkent (UZ); Karimov, Acaz Rasulevich, Tashkent (UZ)
(74) Representative: Herrmann, Uwe

(57) **Abstract**

This invention relates to a system (10) and to a method for eddy flow conversion. According to the invention, a system for eddy flow conversion into effective work has a vorticity booth (3), intake and outtake jets (4,2), a engine generator (6) for electricity output and a turbine (5). The turbine (5) is admitted by a flow medium and the system comprises means for conduction of the flow medium, whereas the means for conduction of the flow medium conduct the flow medium to a self-energizing upstream and downstream admission of the turbine (5).

## Description

This invention relates to a system and to a method for eddy flow conversion into effective work.

Conventional turbine systems for energy production are characterized by a fluid acting on the blades of the turbine, resulting in a rotation of the blades and imparting energy to a generator. These systems are not designed for eddy flow conversion, since high efficiency will be obtained only without or low eddy flow.

Since eddy flow still comprises energy, the conversion of eddy flow would lead to higher efficiency of turbine systems. Moreover, eddy flow can be generated easily by forced convection, but there is no system available, which takes advantage of this effect.

It is therefore an object of the present invention to provide a system and a method for eddy flow conversion with a higher efficiency and which are also easy to operate e.g. as a source of electric, thermal and mechanical energy for industrial applications.

This object is solved according to the invention with a system comprising the features of claim 1.

According to this, a system for eddy flow conversion into effective work has a vorticity booth, intake and outtake jets, an engine generator for electricity output and a turbine within the vorticity booth. The turbine is admitted by a flow medium and the system comprises means for conduction of the flow medium, whereas the means for conduction of the flow medium conduct the flow medium to a self-energizing upstream and downstream admission of the turbine. Within the vorticity booth the eddy flow of the flow medium is directed by means for conduction. This causes an upstream and downstream admission of the turbine, which is self-energizing. The engine generator can be used for starting the system and driving the turbine. After establishing the self-energizing process the generator can be switched into generator mode. The self-energizing effect results in a high efficiency and an economic utilization of the eddy flow within the turbine. Because of the simple arrangement of the system, the production costs are low and it can be preferably used as a local energy producing system.

The turbine of the system for eddy flow conversion can be admitted by a flow medium, whereas the flow medium consists of atmospheric air and water vapour. This allows easy handling of the system.

In a preferred embodiment, the system for eddy flow conversion into effective work has a heater unit for water evaporation, which is located below the turbine. This arrangement allows utilization of the effect, that heated evaporated water is ascending within the vorticity booth after leaving the heater unit and admitting the turbine for a first time when going upstream.

Additionally, the system for eddy flow conversion into effective work can comprise intake jets, which are arranged tangentially at the walls of the vorticity booth. With this arrangement, a circular within the vorticity booth is established. In combination with the ascending evaporated water from the heater unit, the following effects come together in an advantageous way: The ascending evaporated water causes a flow of atmospheric air coming through the intake jets and following the ascending evaporated water. Because of the tangentially arranged intake jets, an eddy flow is established within the vorticity booth.

It is possible, that the intake jets and heater unit are arranged below the turbine, in particular at the bottom part of the vorticity booth. This embodiment comprises the advantage that the height of the vorticity booth may be best possibly used for the ascending flow of the flow medium.

Another embodiment may be carried out by enhancing the flow in the top of the vorticity booth. This may be achieved by means for conduction of the flow medium, which comprise deflectors at the top of the vorticity booth for redirecting the flow medium to the turbine. By this, the eddy flow within the vorticity booth is redirected from the top back to the turbine, which results in better efficiency.

The system for eddy flow conversion into effective work can have a flue leading to an air-exhauster, which is located in an upper portion, in particular at the top of the vorticity booth. The flue serves as an outtake jet, which channels the outgoing flow of the flow medium. The air-exhauster creates an outlet of pressure within the vorticity booth. By switching on the air-exhauster, the process can be accelerated.

Preferably, the system for eddy flow conversion into effective work is carried out with a flue, which is adjacent to the deflectors at the top of the vorticity booth and significantly extending into the vorticity booth. By this, the downstreaming flow medium is forced back to the turbine, but a pressure outlet is also established by the flue.

The system for eddy flow conversion into effective work can be embodied in such way, that the diameter of the flue and the distance between the lower end of the flue and the turbine is chosen in such a way, that the distance is of a higher value than the diameter, whereas the distance is preferably twofold up to fourfold of diameter. This results in the advantage that relation between the outgoing flow and the redirected flow to the turbine is in an advantageous relation, which allows a high self-energizing admission of the turbine and therefore a high efficiency of the whole system.

The invention is also related to a method for eddy flow conversion into effective work with a system to any one of the preceding claims. The method according to the invention comprises the steps, whereas a flow medium is admitted to a turbine within a vorticity booth by means for conduction of the flow medium, whereas the flow medium admits the turbine upstream and downstream in a self-energizing way and the rotatory speed and temperature of the flow medium has its maximal value close to the walls of the vorticity booth. By this, close to the walls of the vorticity booth, the flow medium comprises the highest thermal and mechanical energy when passing the blades of the turbine. This results in a efficient utilization of the energy applied, as the energy producing moment tapped by the turbine is maximized.

Moreover, the method for eddy flow conversion into effective work can comprise the step, that atmospheric air is supplied by tangentially arranged intake jets and mixed with evaporated water. Atmospheric air coming through the intake jets is aspirated by the ascending evaporated water and following the ascending evaporated water. Because of the tangentially arranged intake jets, an eddy flow is established within the vorticity booth.

Additionally, the method for eddy flow conversion into effective work my be carried out with an outlet of pressure in the vorticity booth created by the air-exhauster, which results in ascending of the flow medium to the top of the vorticity booth.

The method can also comprise the feature that electric energy is generated by engine generator, which is driven by the turbine.

It is preferred, when the flow medium passing through the turbine continues the rotation of the turbine, whereas the flow medium is circulating in the upper part of the vorticity booth, streaming down and having its lowest temperature close to the axis of the vorticity booth.

Further details, advantages and features of this invention will be shown by way of example in the drawing.

There are shown:
- Figure 1:: a cross-sectional view of the system for eddy flow conversion in to effective work,
- Figure 2:: a cross-sectional view of Figure 1 from A-A at the bottom of the vorticity booth,
- Figure 3:: a cross-sectional view of Figure 1 from B-B at the top of the vorticity booth.

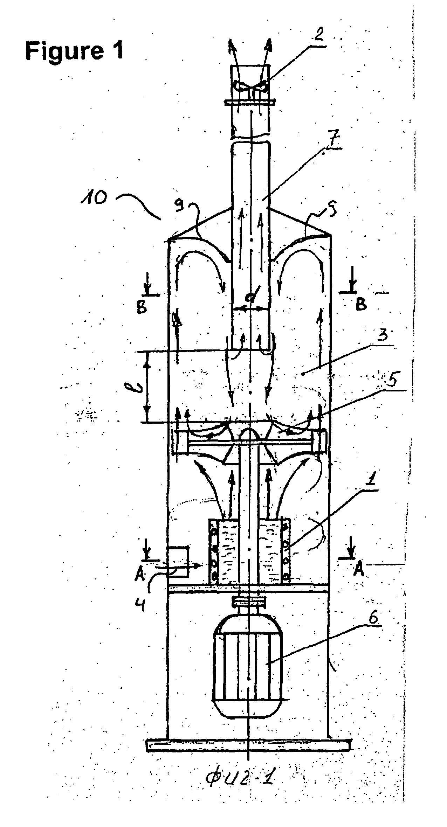

In figure 1 a system for eddy flow conversion 10 is shown in a cross-sectional view. In the heater unit 1 a water is evaporated and ascending to the top of the vorticity booth 3. By ascending of the evaporated water atmospheric air is aspirated through the four symmetrically and tangentially arranged intake jets 4 at the bottom of the vorticity booth 3. By means of the tangentially arrangement of the intake jets 4 a circular flow of the incoming air is established, which allows a mixing with the ascending evaporated water and results in an eddy flow of steam ascending to the top of the vorticity booth 3.

In the middle section of the vorticity booth 3 the turbine 5 is located and connected with the engine generator 6. The ascending steam passes the turbine 5 in the region close to the wall of the vorticity booth and ascends to the top of the vorticity booth 3. At the top, deflectors 9 redirect the steam to turbine 5 along the flue 7. The flue 7 is extending from the top of the vorticity booth 3 into it and has the same axis as the vorticity booth 3. Flue 7 comprises an air-exhauster 2 located at the top of the flue and serves as a pressure outlet for the system. The diameter d of the flue 7 and the distance I between the end of the flue 7 and the turbine 5 are chosen in such a way, that the distance I is of a higher value than the diameter d, whereas the distance I is fourfold of diameter d.

The redirected steam is falling down along the axis of the vorticity booth 3, having its lowest temperature in this region and passing and driving turbine 5. This effect is supporting the driving force of the ascending steam, which is also driving turbine 5. Therefore, the system for eddy flow conversion is self-energizing because of the complementary effects of the ascending steam and the down-falling steam. Because of the higher density of the colder steam in the middle of the vorticity booth, the ascending steam has is maximum rotatory and thermal energy at the region close to the wall of the vorticity booth. This results in optimized a driving force respectively a driving moment which is driving turbine 5.

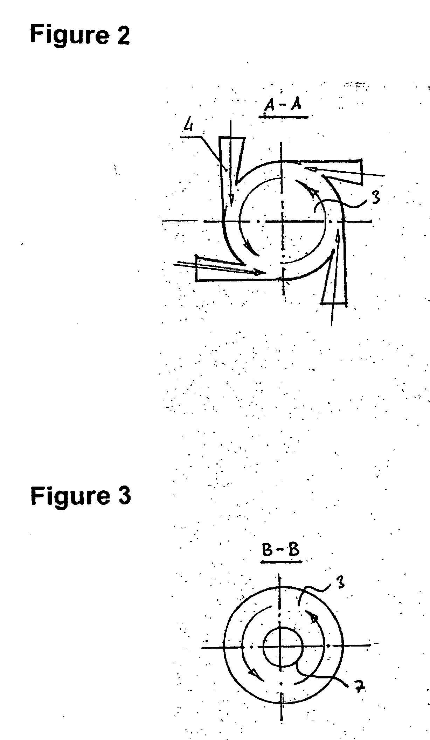

Figure 2 shows a cross-sectional view from A-A through the intake jets 4 at the bottom of the vorticity booth 3. The aspirated atmospheric air is entering the vorticity booth by the intake jets 4 and ascends within a circular flow.

Figure 3 shows a cross-sectional view from B-B through the top of the vorticity booth 3. The ascending and redirected steam flow is also circulated along the flue 7.

## Claims

1. System (10) for eddy flow conversion into effective work, having a vorticity booth (3), intake and outtake jets (4; 2), a engine generator (6) for electricity output and a turbine (5) within the vorticity booth (3), wherein the turbine (5) is admitted by a flow medium and the system (10) comprises means for conduction of the flow medium, whereas the means for conduction of the flow medium conduct the flow medium to a self-energizing upstream and downstream admission of the turbine (5).

2. System (10) for eddy flow conversion into effective work according to claim 1, **characterized in that** the flow medium consists of atmospheric air and/or water vapour.

3. System (10) for eddy flow conversion into effective work according to claim 1 or 2, **characterized in that** below the turbine (5) a heater unit (1) for water evaporation is located.

4. System (10) for eddy flow conversion into effective work according to any one of the preceding claims, **characterized in that** intake jets (4) are arranged tangentially at the walls of the vorticity booth (3).

5. System (10) for eddy flow conversion into effective work according to any one of the preceding claims, **characterized in that** intake jets (4) and heater unit (1) are arranged below the turbine (5), in particular at the bottom part of the vorticity booth (3).

6. System (10) for eddy flow conversion into effective work according to any one of the preceding claims, **characterized in that** the means for conduction of the flow medium comprise deflectors (9) at the top of the vorticity booth for redirecting the flow medium to the turbine (5).

7. System (10) for eddy flow conversion into effective work according to any one of the preceding claims, **characterized in that** a flue (7) leading to an air-exhauster (2) is located at the in an upper portion, in particular top of the vorticity booth (3).

8. System (10) for eddy flow conversion into effective work according to any one of the preceding claims, **characterized in that** the flue (7) is adjacent to the deflectors (9) and significantly extending into the vorticity booth (3).

9. System (10) for eddy flow conversion into effective work according to any one of the preceding claims, **characterized in that** the diameter (d) of the flue (7) and the distance (I) between the lower end of the flue (7) and the turbine (5) are chosen in such a way, that the distance (I) is greater than the diameter (d), whereas the distance (I) is preferably twofold up to fourfold of diameter (d).

10. Method for eddy flow conversion into effective work with a system to any one of the preceding claims, **characterized in that** a flow medium is admitted to a turbine (5) within a vorticity booth (3) by means for conduction of the flow medium, whereas the flow medium admits the turbine (5) upstream and downstream in a self-energizing way and the rotatory speed and temperature of the flow medium has its maximal value close to the walls of the vorticity booth (3).

11. Method for eddy flow conversion into effective work according to claim 10, **characterized in that** atmospheric air is supplied by tangentially arranged intake jets (4) and mixed with evaporated water.

12. Method for eddy flow conversion into effective work according to claim 10 or 11, **characterized in that** an outlet of pressure in the vorticity booth is created by the air-exhauster (2), which results in ascending of the flow medium to the top of the vorticity booth (3).

13. Method for eddy flow conversion into effective work according to any one of the preceding claims, **characterized in that** electric energy is generated by engine generator (6), which is driven by turbine (5).

14. Method for eddy flow conversion into effective work according to any one of the preceding claims, **characterized in that** the flow medium passing through the turbine (5) continues the rotation of the turbine (5), whereas the flow medium is circulating in the upper part of the vorticity booth (3), streaming down and having its lowest temperature close to the axis of the vorticity booth (3).
